(19) Europäisches Patentamt
European Patent Office
Office européen des brevets

(11) **EP 2 337 181 A2**

(12) **EUROPEAN PATENT APPLICATION**

(43) Date of publication:
**22.06.2011 Bulletin 2011/25**

(51) Int Cl.:
**H02J 7/00** $^{(2006.01)}$

(21) Application number: **10192134.4**

(22) Date of filing: **23.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.11.2009 FI 20096254**

(71) Applicant: **Teknoware Oy
15200 Lahti (FI)**

(72) Inventor: **Kuisma, Jouko
15200, Lahti (FI)**

(74) Representative: **Valkeiskangas, Tapio Lassi
Paavali et al
Kolster Oy Ab
Iso Roobertinkatu 23
P.O. Box 148
00121 Helsinki (FI)**

(54) **Arrangement for charging batteries**

(57) An arrangement for charging batteries, the arrangement comprising a battery pack (2) with two or more cell groups (3) connected in series, cell group specific monitoring units (4), and a charger (1) charging the battery pack (2). The cell groups (3) comprise one or more cells. The cell group specific monitoring units (4) are arranged to monitor cell group specifically the voltage of the cell group (3) by leading part of the charging current to flow past the cell group (3) via a by-pass circuit of the monitoring unit (4), if necessary, and comprise means for determining control information *(ctrl)* to be transmitted to a charger (1). The means for determining control information are arranged to determine the control information *(ctrl)* in response to by-pass current ($I_s$) of the by-pass circuit or the temperature of the monitoring unit (4). The charger (1) charging the battery pack (2) comprises means for changing the voltage level of the charging voltage in response to the control information *(ctrl)* determined by any one of the monitoring units (4).

Figure 2

EP 2 337 181 A2

## Description

## Background of the invention

The invention relates to charging batteries and, particularly, to charging a battery pack consisting of series/parallel connections of individual cells. A cell is formed of an electrochemical pair, the electromotive force of which is determined by the material of electrodes and the electrochemical series of the electrolyte. Typical battery cells include lead-acid batteries and alkaline batteries (Pb and NiCd batteries). The latest batteries are lithium-based batteries.

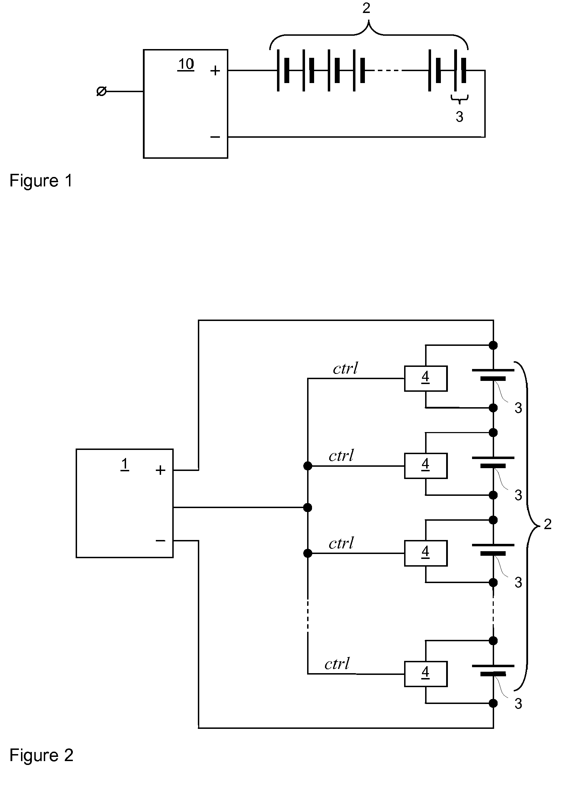

Stationary battery packs are used in various applications requiring continuous electric supply as emergency power supplies in times of mains interruptions. Electric power plants, telephone equipment, and fire alarm units and safety light systems of buildings typically require battery backup. In these cases, battery packs are usually connected to a charger, which keeps them permanently charged, i.e. in 'float charging' (IU-charger / DIN 41773). Figure 1 shows such a charging arrangement. In float charging, all cells 3 of a battery pack 2 are connected in series and the same charging current supplied by a charger 10 flows through them. This requires that the cells 3 of the battery pack 2 are of uniform quality, i.e. that their capacity and self-discharge current are of equal magnitude.

For productional reasons, cells of battery packs are never entirely identical but always have slight differences between them. This leads to small variations in the cells in terms of capacity and self-discharge, for example. This becomes apparent in differences in charging voltages of the cells during recharge. Also, the aging of the cells causes differences between them. For this purpose, various companies have developed different cell-specific monitoring and control devices. Usually these are based on constant voltage, which means that when the cell voltage exceeds an allowable limit, the cell-specific monitoring limits the voltage by leading charging current to flow past the cell via a by-pass circuit. The other cells are thus still supplied with charging current, but the already fully charged cell will not be overcharged. Such applications are common especially in low-antimonial and calcium-alloyed lead-acid batteries, the self-discharge current of which is very low. In these cases, the differences between cells are thus quite considerable in float charging.

The circuitry described in publication CHI 1 855-6 / 1983 IEEE (page 60) are based on balancing the charges of cells of lead-acid batteries, which means that they have a very low charging current. In lead-acid batteries, overcharging does not cause a great risk, but only shortens the lifetime of the battery. Battery monitoring devices used for this purpose are based on handling a low charging current. In addition, they operate independently and are not connected to control the charger.

The latest batteries, lithium batteries, are more intolerant to overcharging than conventional Pb and NiCd batteries. In addition to heating that leads to destruction of batteries, overcharging of lithium batteries may also cause a great risk of explosions. Therefore lithium batteries must have a cell-specific battery monitoring. The monitoring is usually performed by an individual monitoring/control device of each cell of the battery pack, measuring cell-specific charging voltages and controlling the charging device of the battery pack accordingly. Another alternative is to use the above-mentioned cell-specific voltage compensation unit provided with a by-pass circuit.

To prevent overheating of lithium batteries, there are solutions on the market, in which a temperature-measuring sensor is arranged in connection with the battery or each one of its cells. When the temperature of the battery or one of its cells becomes too high, the sensor gives an alarm or interrupts the charging.

Patent publication US 6,211,650 discloses an example of a charging arrangement which leads charging current to flow via a by-pass circuit. There, a by-pass current is led cell-specifically via a monitoring unit to a MOSFET, where the power induced by the by-pass current causes heat losses. The rest of the battery pack is still being charged, but the fully charged or defective cells will not be overcharged. Since the charging current flow via the by-pass circuit causes power losses, the by-pass circuit unit heats up. Lithium-ion batteries have a high charging current, wherefore their monitoring unit provided with a by-pass circuit must be constructed to withstand a high dissipation power. This requires integration of power cooling elements into the by-pass circuit unit, which makes the arrangement large and expensive.

Patent publication US 6,271,646 discloses a similar arrangement, but, to avoid power losses, the by-pass current is led via different complex circuit arrangements to other cells of the battery pack.

Patent publication US 6,417,646 discloses a solution in which the voltage of a battery cell is kept constant with a by-pass circuit. The condition of the cell is monitored with a pulse discharge circuit. The charging current of the battery is controlled by using information provided by the discharge circuits. However, the publication does not disclose a control arrangement or method. Furthermore, the solution of the publication is complicated to implement.

Patent publication US 5,578,914 also discloses a by-pass current arrangement, where a by-pass current has a maximum value (saturation value), after which the cell voltage starts to increase again. This reincrease of the cell voltage is used for step control of the charger current. A problem is a two-phase increase of the cell voltage and the separation of the phases from one another.

## Brief description of the invention

An object of the invention is thus to develop an arrangement so as to solve the above-mentioned problems. The object of the invention is achieved by an arrangement which is characterized by what is disclosed in the independent claim. The preferred embodiments of the invention are disclosed in the dependent claims.

The invention is based on connecting each cell of a battery pack with a monitoring unit, which monitors the cell voltage by leading part of the charging current to flow via a by-pass circuit of the monitoring unit, if necessary. The temperature of the monitoring unit provided with the by-pass circuit is measured, and when the measured variable value exceeds the set limit value, the unit conveys the control information to a charger, which decreases the charging current of the battery pack. When the output voltage of the charger is reduced, the current is also reduced indirectly. A lower current also reduces the temperature of the by-pass circuit. The control continues until the measured variable value becomes lower than the set limit value of the cell-specific monitoring unit. Deviating from the prior art, the invention is based on measuring the temperature and, by means of the measured variable value, linearly controlling the charger voltage to a desired value, which may be constant or linearly dependent on the measured variable value.

An advantage of the arrangement of the invention is a simpler implementation. With the arrangement of the invention, the charger voltage may be controlled to a desired value, which may be constant or linearly or non-linearly dependent on the measured variable.

**Brief description of the figures**

The invention will be described in greater detail in connection with the preferred embodiments and with reference to the accompanying drawings, in which:

> Figure 1 shows a battery pack and a charging device,
> Figure 2 shows an arrangement of the invention,
> Figure 3 shows a monitoring and by-pass circuit unit with a current measurement and a simple control and alarm function,
> Figure 4 shows an operating curve of the current measurement of the monitoring and by-pass circuit unit and the various operation modes thereof, and
> Figure 5 shows a monitoring and by-pass circuit unit with a current measurement and a linear charger control.

**Detailed description of the invention**

The arrangement of the invention applies the same basic principle as a constant voltage monitoring device provided with a by-pass circuit, described in CHI 1 855-6 / 1983 IEEE. Figure 2 shows an arrangement of the invention, in which each cell 3 of a battery pack 2 is connected with a monitoring unit 4, which monitors the cell voltage by leading part of the charging current to flow via a by-pass circuit of the monitoring unit 4, if necessary.

The drawbacks of the above arrangements are avoided by measuring the by-pass current of the by-pass circuit of the monitoring unit 4, and when the by-pass current exceeds the set limit value, the unit conveys control information *ctrl* to a charger 1, which reduces the charging voltage of the battery pack 2. When the output voltage of the charger 1 is reduced, the current is also reduced indirectly. The control continues until the by-pass current becomes lower than the set limit value of the cell-specific monitoring unit.

When the by-pass current increases, the temperature of a cooling element used in the by-pass circuit rises in the same proportion, which means that the temperature is directly dependent on the by-pass current. In an alternative arrangement, the monitoring unit 4 is provided with a temperature sensor measuring the temperature of the by-pass circuit. Since the operation of a by-pass circuit is based on circulating the charging current past the cell and converting the by-pass current into heat losses, the by-pass circuit always heats to some extent. When the by-pass current increases to the extent that the temperature of the by-pass circuit rises to a predetermined value, the temperature sensor controls the charging voltage of the battery charger 1 and reduces it until the charging current is so low that the temperature of the by-pass circuit does no longer exceed the set temperature value. The cell 3 may also heat, even though its voltage would not increase to the set upper limit for the cell voltage. For instance, if a cell is defective, or even in a short circuit, current flows into the cell but the voltage does not increase. As a result, the cell heats. By arranging the monitoring unit 4 and its by-pass circuit in the immediate vicinity of the battery cell 3, the temperature sensor may also be used for sensing the overheating of the cell.

In an alternative, the charger 1 may be switched off completely on the basis of the information provided by the monitoring unit 4 and simultaneously an alarm indication may be given to the maintenance personnel. The alarm function may also be added to other embodiments of the arrangement.

The by-pass circuit may be constructed to handle (thermally withstand) part, for instance 20% to 50%, of the maximum current of the charger 1. When used like this, the by-pass circuit provides the advantage that the charger 1 and the by-pass circuit balance the differences between the cells 3 of the lithium battery pack 2 by charging the cells 3 in an incomplete charging state and leading charging current of the fully charged or defective cells 3 to flow via the by-pass circuit. On the other hand, if the capacity differences of the cells 3 are considerable (such as 20% to 50%), the by-pass circuit does not have to be dimensioned thermally too large according to such a defective cell. The charger 1 control information provided by the monitoring unit 4 with the by-pass circuit may also be arranged to be linear, non-linear or such that it provides a direct on/off control for the charger.

The latest lithium iron phosphate batteries are no longer so insensitive in terms of charging voltages as the previous applications. Thus, lithium iron phosphate batteries may already be manufactured as cell groups of 6 V or even 12 V. They do not require a cell-specific monitoring anymore, and the terminals of individual cells are not visible on the outer side of the enclosure. The circuit arrangement described herein may also be used for balancing voltages of battery blocks, instead of individual cell voltages. In this case, voltage settings must be provided for values that are twice or four times as high. Cells can also be connected to form cell groups so that a group includes a plurality of parallel-connected cells. In this document, said cells may be replaced by the above-mentioned cell groups.

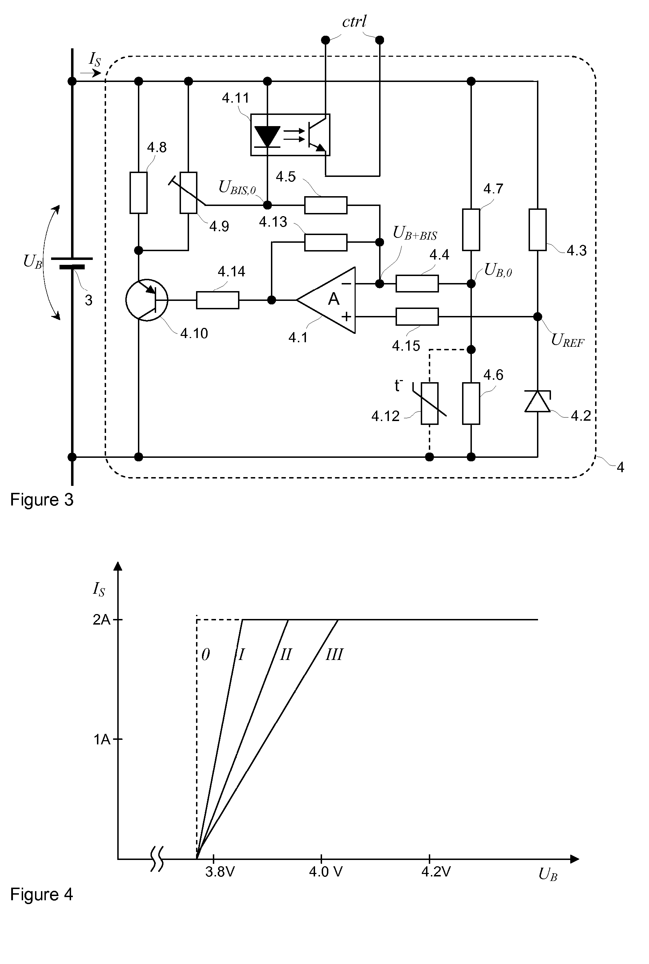

Figure 3 shows a preferred embodiment of the invention, in which the monitoring unit 4 leads the charging current of the cell 3 to flow via the by-pass circuit, if necessary. When the cell 3 is being charged, the voltage $U_B$ of the cell 3 increases in proportion to the charge level. In other words, when the cell 3 becomes more charged, the voltage $U_B$ of the cell 3 increases. A noninverting (+) input of an amplifier 4.1 is supplied with a reference voltage $U_{REF}$, which is generated by a voltage regulator, such as a Zener diode 4.2 and a current limiting resistor 4.3 thereof. Two pieces of measurement information are supplied to an inverting (-) input of the amplifier 4.1 via summing resistors 4.4 and 4.5. The first piece of measurement information is the actual value $U_{B',o}$ of the cell voltage, formed of the cell voltage $U_B$ by means of two resistors 4.6 and 4.7. The second piece of measurement information is a voltage $U_{BIS,0}$ proportional to the cell 3 voltage $U_B$ and by-pass current $Is$, which is obtained from a current measuring resistor 4.8 by means of a control potentiometer 4.9.

At first, only the effect of the first measurement information, i.e. the actual value of the cell voltage, on the circuit is examined. When the actual value $U_{B,o}$ of the cell voltage is lower than the reference voltage $U_{REF}$, the output of the amplifier 4.1 has a high value and a transistor 4.10 is in a non-conducting state (cut-off state). In this case there is no by-pass current $Is$, and the current measurement information $U_{BIS,O}$ is equal to the actual value $U_{B,0}$ of the cell voltage. When the cell voltage $U_B$ increases during the charging so much that the value of the inverting (-) input of the amplifier 4.1 reaches the value of the reference voltage $U_{REF}$, the voltage of the output of the amplifier 4.1 starts to decrease, which controls the transistor to a conducting state. Then, charging current of the cell 3 starts to flow via the transistor. The current settles to a level at which the voltage $U_B$ of the cell 3 remains constant. In other words, if the by-pass current $Is$ increases so much that the voltage $U_B$ of the cell 3 starts to decrease, the amplifier 4.1 decreases the control of the transistor 4.10 so that the by-pass current $Is$ also decreases and the voltage $U_B$ of the cell 3 is allowed to increase. The monitoring unit 4 thus stabilizes the voltage $U_B$ of the cell 3 to be in line with a curve 0 of Figure 4. The cell voltage $U_B$ remains constant regardless of the by-pass current $Is$. The charger limits the by-pass current $Is$ in such a manner that the upper limit set for it (2A in Figure 4) will not be exceeded.

In addition, by taking into account the measurement information $U_{BIS,0}$ for the by-pass current of the circuit 4 of Figure 3, it is also possible to change the voltage $U_B$ of the cell 3 in response to the by-pass current $Is$. The by-pass current measurement information $U_{BIS,0}$ is responsive to the by-pass current $Is$ and the cell voltage $U_B$ as follows:

$$U_{BIS,0} = U_B - k \cdot R_S \cdot I_s$$

where $R_s$ is the resistance of the power resistor 4.8 and k is the ratio for voltage division of the control potentiometer 4.9, varying between 0 and 1. The increase in the by-pass current $I_s$ thus decreases the by-pass current measurement information $U_{BIS,0}$. The by-pass current measurement information $U_{BIS,0}$ is supplied via the summing resistor 4.5 to the inverting (-) input of the amplifier 4.1. The inverting (-) input of the amplifier 4.1 is now supplied with sum information $U_{B+BIS,0}$ of the cell voltage actual value $U_{B,0}$ and the by-pass current measurement information $U_{BIS,0}$ via the summing resistors 4.4 and 4.5. When the value of the by-pass current measurement information $U_{BIS,0}$ decreases, the sum information $U_{B+BIS,0}$ also decreases. In other words, when the by-pass current increases, the sum information $U_{B+BIS,0}$, which is connected to the inverting (-) input of the amplifier 4.1, decreases. The amplifier 4.1 corrects the situation by controlling the cell voltage $U_B$ to increase. In this way, the cell voltage $U_B$ is also made responsive to the by-pass current $Is$. Figure 4 shows various cell voltage $U_B$ curves, which are responsive to the by-pass current $Is$ depending on the ratio k. The first curve 0 illustrates a situation where the ratio k = 0, i.e. the measurement result obtained from the control potentiometer 4.9 is the same as the voltage over the cell. In this case, the cell voltage $U_B$ is not responsive to the by-pass current $I_s$. Three other curves (I, II, III) illustrate situations in which the ratio k is bigger than zero. A bigger ratio k increases the effect of the by-pass current $Is$ on the cell voltage $U_B$. With the ratio value k = 1, the measurement result obtained from the control potentiometer 4.9 corresponds to the voltage over the power resistor 4.8.

The circuit of Figure 3 shows control information ctrl, which passes via an optoisolator 4.11 to the charger, which is shown in Figure 2 with reference numeral 1. With this control information ctrl it is possible to control the charging current and/or voltage of the charger. Figure 3 only shows the principle of the circuit and the amplifier, for example, may be a P controller, a PI or PID controller, or any combination thereof.

The circuit of Figure 3 also shows the principle of an overheat monitoring/alarm circuit, which is achieved by the temperature sensor 4.12. When the temperature rises above the set value, the temperature sensor 4.12 controls the measurement circuit of the amplifier 4.1 so that the set cell voltage $U_B$ decreases in response to the temperature. The resistance of the temperature sensor 4.12 increases when the temperature rises, as a result of which the voltage of the inverting (-) input of the amplifier 4.1 tends to increase, because the voltage division that produces the cell voltage actual value $U_{B,0}$ changes. To compensate for this, the amplifier 4.1 controls the cell voltage $U_B$ to decrease. This also means that the by-pass current $I_s$ increases. The by-pass current $Is$ may thus be used for indicating the temperature. The components of the circuit may also be selected in such a manner that the circuit controls the current of the charger (Figure 2, reference numeral 1) and reduces it. In a preferred embodiment of the invention, control information is supplied directly from the temperature sensor 4.12 to the charger (Figure 2, reference numeral 1).

Figure 3 also shows a compensation resistor 4.13 of the amplifier 4.1, a current limiting resistor 4.14 of the transistor 4.10 base, and a current limiting resistor 4.15 of the non-inverting (+) input of the amplifier 4.1.

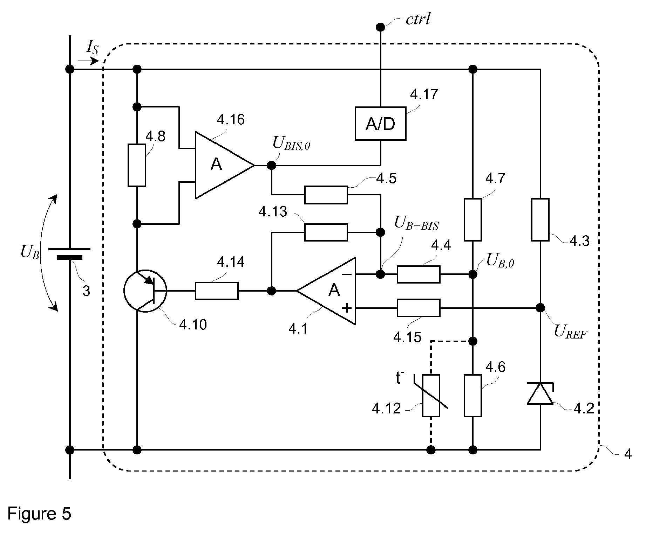

Figure 5 shows yet another preferred embodiment of the invention, in which the monitoring unit 4 leads the charging current of the cell 3 to flow via the by-pass circuit, if necessary, and the control information *ctrl* provided by the monitoring unit 4 to the charger (Figure 2, reference numeral 1) is linear. The operation of the monitoring unit 4 is essentially the same as in the embodiment of Figure 3. Differing from the above, however, in this embodiment the by-pass current is measured by means of the amplifier 4.16 and the measurement is converted by an A/D converter 4.17 into digital form and transmitted to the charger. A measurement result signal is galvanically isolated from the circuit of the monitoring unit.

It is obvious to a person skilled in the art that, as technology advances, the basic idea of the invention may be implemented in various ways. The invention and its embodiments are thus not restricted to the above examples but may vary within the scope of the claims.

**Claims**

1. An arrangement for charging batteries, the arrangement comprising
   cell groups (3) with one or more cells,
   a battery pack (2) with two or more cell groups (3) connected in series,
   cell group specific monitoring units (4) arranged to monitor cell group specifically the voltage of the cell group (3) by leading part of the charging current to flow past the cell group (3) via a by-pass circuit of the monitoring unit (4), if necessary, and comprising means for determining control information *(ctrl)* to be transmitted to a charger (1), and
   a charger (1) charging the battery pack (2) and comprising means for charging the battery pack (2) in response to the control information *(ctrl)* determined by any one of the monitoring units (4), **characterized in that**
   the means for determining control information are arranged to determine the control information *(ctrl)* in response to the temperature of the monitoring unit (4), and
   the charger (1) charging the battery pack (2) comprises means for changing the voltage level of the charging voltage in response to the control information *(ctrl)* determined by any one of the monitoring units (4).

2. An arrangement as claimed in claim 1, **characterized in that** the monitoring unit (4) and its by-pass circuit are arranged in the vicinity of the battery cell (3) in such a manner that a temperature sensor may also be used for sensing the overheating of the cell.

3. An arrangement as claimed in claim 1 or 2, **characterized in that** the monitoring unit (4) is arranged to control the voltage ($U_B$) of the cell group in response to by-pass current ($Is$) of the by-pass circuit of the monitoring unit (4).

4. An arrangement as claimed in any one of claims 1 to 3, **characterized in that** the means for determining the control information *(ctrl)* in response to the temperature are arranged to determine the temperature directly by using a temperature sensor (4.12).

5. An arrangement as claimed in any one of claims 1 to 3, **characterized in that** the means for determining the control information *(ctrl)* in response to the temperature are arranged to determine the temperature indirectly on the basis of the by-pass current ($I_s$).

6. An arrangement as claimed in any one of claims 1 to 5, **characterized in that** the charger (1) charging the battery pack (2) comprises means for charging the battery pack (2) in response to the control information *(ctrl)* determined by any one of the monitoring units (4) in such a manner that the charger (1) starts to limit the charging of the battery pack (2) when the value of the control information *(ctrl)* determined by any one of the monitoring units (4) exceeds a predetermined limit value.

7. An arrangement as claimed in any one of claims 1 to 5, **characterized in that** the charger (1) charging the battery pack (2) comprises means for charging the battery pack (2) in response to the control information *(ctrl)* determined by any one of the monitoring units (4) by using on/off-type control.

Figure 1

Figure 2

Figure 3

Figure 4

Figure 5

**EP 2 337 181 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6211650 B
- US 6271646 B
- US 6417646 B
- US 5578914 A